# EUROPÄISCHE PATENTSCHRIFT

(11) **EP 2 645 035 B1**
(45) Veröffentlichungstag und Bekanntmachung des Hinweises auf die Patenterteilung: **21.03.2018**
(21) Anmeldenummer: 13152659.2
(22) Anmeldetag: 25.01.2013
(51) Int. Cl.: F27B 7/22, F27B 7/26

(54) **DREHTROMMELOFEN**
ROTATING DRUM OVEN
FOUR À TAMBOUR ROTATIF

(30) Priorität: 29.03.2012 DE 202012101139 U; 04.09.2012 DE 202012103369 U
(43) Veröffentlichungstag der Anmeldung: 02.10.2013
(73) Patentinhaber: SUG Schmelz- und Gießanlagen GmbH & Co. KG, 45701 Herten (DE)
(72) Erfinder: Schmidt, Dieter, 45701 Herten (DE)
(74) Vertreter: Nunnenkamp, Jörg

(56) Entgegenhaltungen:
- EP-A1- 0 019 136
- EP-A1- 0 567 777
- EP-A2- 0 421 411
- WO-A1-01/90589
- DE-B- 1 283 859

## Beschreibung

Die Erfindung betrifft einen Drehtrommelofen, insbesondere Metallschmelz-Drehtrommelofen, vorzugsweise Metallschmelz-Kipp-/Drehtrommelofen, mit einer um ihre Längsachse drehbar in einem Gestell gelagerten Ofentrommel, wobei die Ofentrommel mit einer kardanischen Lagerung gegenüber dem Gestell ausgerüstet ist, und wobei wenigstens ein Lagerring als Bestandteil der kardanischen Lagerung realisiert ist, welcher die Ofentrommel drehbar aufnimmt und von zwei ihn gelenkig tragenden Lagern gehalten wird.

Drehtrommelöfen werden beispielsweise zum Einschmelzen von verunreinigten bzw. oxidierten aluminiumhaltigen Werkstoffen und zur Herstellung von sogenanntem Sekundäraluminium eingesetzt. Dazu wird größtenteils mit Salzbadschmelzen im Drehtrommelofen gearbeitet. Durch den chargenweisen Betrieb sind schnelle Legierungswechsel möglich und das Verfahren ist insgesamt unempfindlich gegenüber Verunreinigungen. Dabei ist für die Arbeit im Drehtrommelofen das Schmelzen unter einer Salzdecke charakteristisch, wobei eine flüssige Salzschlacke anfällt. Auf diese Weise werden Abbrandverluste verringert und ein großer Teil der Verunreinigungen im Salz gesammelt.

Da das verunreinigte Salz bzw. die Salzschlacke kostenaufwändig entsorgt werden muss, ist man bestrebt, salzarm zu schmelzen. Aus diesem Grund gewinnen zunehmend Kipptrommelöfen bzw. Metallschmelz-Kipptrommelöfen Bedeutung, die im Wesentlichen für die Verarbeitung von oxidhaltigen Materialien wie Krätzen, Gröben und oxidierten Spänen geeignet sind. Dabei kann insgesamt mit geringeren Mengen Salz gearbeitet werden im Vergleich zu starr ausgelegten Drehtrommelöfen ohne Kippvorrichtung. Tatsächlich kann nämlich bei solchen Kipptrommelöfen der dann trockene und in krümeliger und/oder in stückiger Form vorliegende Salzkuchen bzw. das Salzoxidgemisch beim Metallabstich im Ofen zurückgehalten werden. Der fragliche Salzkuchen kann danach durch Rotation in Kippstellung aus dem Kipptrommelofen entfernt werden. Auf diese Weise wird u. a. der Salz- und Energieverbrauch reduziert.

Ein Drehtrommelofen bzw. Kipptrommelofen wird in der DE 25 00 402 A1 beschrieben. Hier kommt ein Drehrohrofen zum Ausschmelzen leichter schmelzbarer Stoffe zum Einsatz, der über eine einstellbare Neigung der Rotationsachse seiner Ofentrommel verfügt. Zu diesem Zweck verfügt die Ofentrommel über zwei mit Abstand voneinander angeordnete Laufringe, die auf Rollen gelagert sind. Die Rollen werden ihrerseits von einem gemeinsamen Gestell getragen. Das Gestell lässt sich mit Hilfe von hydraulischen Einrichtungen um zwei nahe den beiden Ofenenden liegende horizontale Achsen kippen.

Im Rahmen des gattungsbildenden Standes der Technik nach der EP 0 421 411 A2 wird ein Drehofen beschrieben, der von einem Drehantrieb angetrieben wird. Die Ofendrehtrommel verfügt über offene Enden und wird von Ringteilen druckbeaufschlagt. Jedes Ringteil ist mit einer Axialhülse verbunden, welches zur radialen Drehlagerung der Ofendrehtrommel dient. Außerdem besteht die Möglichkeit, dass das Ringteil mit einem Zwischenring über zwei senkrecht zueinander angeordnete Ausgleichsachsen kardanisch befestigt wird.

In Folge der dadurch bewirkten kardanischen Lagerung der Trommelenden wird ermöglicht, durch Trommellast bedingte Toleranzen im Lagerungsbereich zu berücksichtigen und auch größere vorbestimmte Schiefstellungen der Ofendrehtrommel gegenüber den Lagereinheiten bzw. gegenüber deren Achsen ohne konstruktive Maßnahmen am Gestell hinzunehmen. Dadurch soll eine mechanisch unempfindliche Ausführungsform zur Verfügung gestellt werden, die ferner thermisch wechselbeständig ist und praktisch keinen Abmessungsbegrenzungen unterliegt.

Der Stand der Technik kann nicht durchweg überzeugen. Denn die Ofentrommel neigt mit zunehmender Gebrauchsdauer und/oder im Betrieb dazu, Relativbewegungen gegenüber dem Gestell zu vollführen. Solche Relativbewegungen lassen sich beispielsweise darauf zurückführen, dass die den Ofen drehbar tragenden Rollen mit steigender Gebrauchsdauer verschleißen und folglich nicht mehr rund laufen. Hinzu kommt, dass derartige Drehtrommelöfen über wachsende Dimensionen verfügen, die in Verbindung mit dem typischerweise eingesetzten Brennerbetrieb zu zum Teil unterschiedlichen Wärmedehnungen der Ofentrommel führen.

Als Folge dieser sämtlichen Phänomene beobachtet man einen "Schlag" der Ofentrommel bei ihrer Rotation bzw. mehr oder minder ausgeprägte Taumelbewegungen um ihre Längsachse. Auch eine Axialverschiebung der Längsachse aufgrund thermischer Effekte kann nicht ausgeschlossen werden. Diese verschiedenen betriebsbedingten Phänomene führen einerseits zu einem unrunden Lauf der Ofentrommel gegenüber dem Gestell und andererseits dazu, dass zwangsläufig vorgesehene Lagerelemente für die Ofentrommel zunehmend verschleißen.

Der Austausch solcher Lagerelemente ist aufwändig und insofern kostenintensiv, weil er nur bei stillstehender Ofentrommel und folglich in abgekühltem Zustand erfolgen kann. Während dieser Zeit ist kein Betrieb des Drehtrommelofens möglich, so dass aufgrund des Produktionsstopps erhebliche Verluste entstehen. Hier will die Erfindung insgesamt Abhilfe schaffen.

Der Erfindung liegt das technische Problem zugrunde, einen derartigen Drehtrommelofen so weiter zu entwickeln, dass die Lagerung der Ofentrommel verbessert ist und hieraus ein insbesondere möglichst schlagarmer Lauf der Ofentrommel mit zugleich langer Lebensdauer der Lagerung resultiert.

Zur Lösung dieser technischen Problemstellung ist ein gattungsgemäßer Drehtrommelofen im Rahmen der Erfindung dadurch gekennzeichnet, dass der Lagerring wenigstens zweiteilig mit einem ortsfesten Festlagerring und einem an die Ofentrommel angeschlossenen Loslagerring ausgebildet ist, so dass die Ofentrommel mit dem zugehörigen Loslagerring gegenüber dem Festlagerring problemlos um ihre Längsachse rotieren kann.

Dabei ist im Rahmen der Erfindung die kardanische Lagerung so ausgelegt, dass sie Bewegungen der Längsachse der Ofentrommel in Axialrichtung und/oder Radialrichtung und/oder Schwenkbewegungen um einen Drehpunkt der Längsachse jeweils innerhalb vorgegebener Grenzen zulässt.

Die Erfindung greift also auf eine spezielle Lagerung der Ofentrommel gegenüber dem Gestell zurück. Tatsächlich sind die bisherigen Lagerungen der Ofentrommel im zugehörigen Gestell und insbesondere bei Kipptrommelöfen so ausgelegt, dass die Längsachse der Ofentrommel ihre Position (im Raum) - bis auf die gewünschten Kippbewegungen um einen bzw. beide Endpunkte der Längsachse - beibehält bzw. nicht verändern kann. Demgegenüber werden erfindungsgemäß Bewegungen der Längsachse der Ofentrommel bewusst - innerhalb der vorgegebenen Grenzen - zugelassen. Bei den Bewegungen der Längsachse kann es sich um solche in ihrer Axialrichtung handeln. Alternativ oder zusätzlich sind aber auch Bewegungen der Längsachse in Radialrichtung der Ofentrommel möglich, d. h. eine Art Parallelversatz der Längsachse. Ebenso nimmt die erfindungsgemäß realisierte kardanische Lagerung der Ofentrommel gegenüber dem Gestell alternativ oder zusätzlich Schwenkbewegungen der Längsachse um einen Drehpunkt auf der Längsachse (zwischen den Endpunkten) auf.

Hierbei geht die Erfindung insgesamt von der Erkenntnis aus, dass die realisierte kardanische Lagerung der Ofentrommel gegenüber dem Gestell solche Bewegungen aufnehmen kann und ausdrücklich zulässt. Tatsächlich zeichnet sich eine solche kardanische Lagerung der Ofentrommel gegenüber dem Gestell dadurch aus, dass die üblicherweise miteinander fluchtende bzw. parallel zueinander angeordnete Längsachse der Ofentrommel und die Längsachse des Gestells erfindungsgemäß Relativbewegungen zueinander ausführen können. Das ist das Wesen einer kardanischen Lagerung, welche im Regelfall zwei nicht fluchtende Wellen miteinander verbindet.

Auf die Erfindung übertragen bedeutet dies, dass aufgrund der kardanischen Lagerung der Ofentrommel gegenüber dem Gestell die Längsachse der Ofentrommel Relativbewegungen gegenüber der Längsachse des Gestells, der Gestelllängsachse, ausführen kann.

Solche Relativbewegungen zwischen den beiden Längsachsen werden aufgrund der zuvor geschilderten Umstände derart beobachtet, dass die Längsachse der Ofentrommel Bewegungen gegenüber dem Gestell bzw. der Gestelllängsachse in Axialrichtung und/oder der Radialrichtung und/oder Schwenkbewegungen um einen Drehpunkt vollführen kann. Diesen sämtlichen Bewegungen der Längsachse der Ofentrommel sind selbstverständlich (mechanische) Grenzen gesetzt, die davon abhängen, welche mechanischen Bewegungen bzw. Freiheitsgrade die realisierte kardanische Lagerung der Ofentrommel gegenüber dem Gestell zulässt.

Im Ergebnis wird ein Drehtrommelofen und insbesondere ein Metallschmelz-Kipp-/Drehtrommelofen zur Verfügung gestellt, dessen Ofentrommel aufgrund ihrer kardanischen Lagerung gegenüber dem Gestell insbesondere Wärmedehnungen problemlos aufnehmen kann. Außerdem eröffnet die kardanische Lagerung gegenüber dem Gestell die Möglichkeit, den Ofen und ggf. zusätzlich Laufringe am Ofen mit größeren Fertigungstoleranzen als bisher im Gestell einbauen zu können. Dadurch werden Vorteile der Erfindung nicht nur mit Blick auf die Beherrschung von Wärmedehnungen erreicht, sondern findet eine zusätzliche Geld- und Zeitersparnis statt. Denn größere Fertigungstoleranzen bedeuten zugleich geringere Kosten und auch verminderten Herstellungs- bzw. Montageaufwand.

Um dies im Detail umzusetzen, ist das Gestell im Regelfall mehrteilig und insbesondere zweiteilig ausgebildet. Tatsächlich setzt sich das Gestell meistens aus einem schwenkbaren Tragarm (oder Tragbalken) bzw. einem schwenkbaren Lagerring und einem gelenkig abgestützten Lagerbock (ebenfalls mit Lagerring) zusammen. Außerdem ist das Gestell meistens mit einer angreifenden Kippvorrichtung ausgerüstet. Bei dem Drehtrommelofen handelt es sich folglich um einen Kipp-Trommelofen bzw. Kipp-Drehtrommelofen. Der Lagerbock als Bestandteil des zweiteiligen Gestells stützt sich im Allgemeinen gelenkig an der Kippvorrichtung ab. Meistens ist der Lagerbock kopfseitig an die Kippvorrichtung angeschlossen. Die Kippvorrichtung ihrerseits ist im Regelfall mit wenigstens einer Zylinderkolbenanordnung ausgerüstet. Meistens sind zwei Zylinderkolbenanordnungen vorgesehen. Diese Zylinderkolbenanordnungen werden regelmäßig im Sinne eines Synchronlaufes angesteuert. Das kann mechanisch und/oder elektrisch bzw. elektronisch erfolgen. Außerdem sorgen die Zylinderkolbenanordnungen dafür, dass ein etwaiges Gegenmoment des Antriebes aufgefangen wird.

Bei einer mechanischen Realisierung des Synchronlaufes der beiden Zylinderkolbenanordnungen wird typischerweise so vorgegangen, dass zwei Hydraulikpumpen für jeweils eine Zylinderkolbenanordnung von einem gemeinsamen mechanischen Antrieb beaufschlagt werden. Zur Realisierung des elektrischen bzw. elektronischen Synchronlaufes der beiden Zylinderkolbenanordnungen kann so vorgegangen werden, dass jeweils der Stellweg der Zylinderkolbenanordnungen ermittelt und in einer zugehörigen Steuervorrichtung verglichen wird. Bei Abweichungen sorgt die Steuervorrichtung dann dafür, dass die jeweils vorauseilende Zylinderkolbenanordnung abgebremst bzw. die nacheilende Zylinderkolbenanordnung beschleunigt wird.

Eine derart ausgelegte Kippvorrichtung mit wenigstens einer bzw. vorzugsweise zwei Zylinderkolbenanordnungen ist auch aus dem Grund besonders vorteilhaft, weil das zu ihrem Betrieb notwendige Hydraulikmedium und entsprechende Pumpen auch für den Antrieb der Ofentrommel eingesetzt werden können. Tatsächlich verfügt die Ofentrommel meistens über einen hydraulischen Antrieb. Der hydraulische Antrieb kann an einem Zapfen oder Bolzen der Ofentrommel an ihrem antriebsseitigen Ende angreifen. Der hydraulische Antrieb greift regelmäßig an dem einer Ofenöffnung gegenüberliegenden Ofenende an.

Der hydraulische Antrieb verfügt über ein oder mehrere Hydraulikzylinder bzw. einen oder mehrere hydraulische Linearmotoren. Deren Linearbewegung wird mit Hilfe eines zugehörigen Getriebes in eine Rotationsbewegung der Ofentrommel umgesetzt. Dabei kann vorteilhaft mit einem Hydraulikmedium und einer Hydraulikversorgung für einerseits den Antrieb der Ofentrommel und andererseits die Kippvorrichtung gearbeitet werden. Das ist selbstverständlich nicht zwingend.

Neben dem kopfseitig der Kippvorrichtung und dort gelenkig abgestützten Lagerbock verfügt das zweiteilige Gestell erfindungsgemäß zusätzlich über den bereits angesprochenen schwenkbaren Tragarm bzw. den schwenkbaren Lagerring. Dieser Lagerring ist Bestandteil der kardanischen Lagerung. Tatsächlich weist die kardanische Lagerung zumindest zwei sowie wenigstens einen die Ofentrommel drehbar aufnehmenden Lagerring gelenkig tragende Lager auf. Das heißt, es ist wenigstens ein Lagerring realisiert, welcher die Ofentrommel drehbar aufnimmt. Dieser wenigstens eine Lagerring wird von zwei ihn gelenkig tragenden Lagern gehalten.

Im Regelfall weist die kardanische Lagerung zwei Lagerringe auf, und zwar einen frontseitigen und einen rückseitigen Lagerring. Der frontseitige Lagerring übergreift im Allgemeinen eine frontseitig vorgesehene Öffnung der Ofentrommel bzw. eine dort platzierte Ofenöffnung. Dementsprechend verfügt der frontseitige Lagerring über einen Durchmesser, welcher regelmäßig den Durchmesser der zuvor angesprochenen Öffnung übersteigt. Demgegenüber ist der rückseitige Lagerring meistens mit einem geringeren Durchmesser ausgerüstet. Tatsächlich ist der rückseitige Lagerring oftmals zentral an eine Rückwand der Ofentrommel angeschlossen. Der rückseitige Lagerring ist über den gelenkig abgestützten Lagerbock an die bereits erläuterte Kippvorrichtung angeschlossen. Das heißt, der fragliche Lagerbock stützt sich gelenkig an der Kippvorrichtung ab und ist seinerseits unter Zwischenschaltung des rückseitigen Lagerringes mit der Rückwand der Ofentrommel und folglich der Ofentrommel im Ganzen verbunden.

In diesem Zusammenhang hat es sich bewährt, dass der jeweilige Lagerring wenigstens zweiteilig ausgebildet ist. Tatsächlich verfügt der Lagerring über den Festlagerring und den Loslagerring. Der Festlagerring ist bei dem frontseitigen Lagerring den gelenkig tragenden Lagern zugeordnet bzw. an diese angeschlossen. Demgegenüber geht der Festlagerring beim rückseitigen Lagerring eine feste Verbindung mit dem dortigen Lagerbock ein. Im Gegensatz hierzu ist der jeweilige Loslagerring an die Ofentrommel angeschlossen. Dadurch kann die Ofentrommel mit dem zugehörigen Loslagerring gegenüber dem jeweils ortsfesten Festlagerring problemlos um ihre Längsachse rotieren.

Es hat sich bewährt, den jeweiligen Lagerring als Drehkranz und insbesondere Kugeldrehkranz auszugestalten. Im Falle eines Kugeldrehkranzes sind die beiden Lagerringe bzw. der Festlagerring und der Loslagerring mit einer zwischen den beiden Lagerringen vorgesehenen Laufbahn ausgerüstet. In dieser Laufbahn werden Wälzelemente geführt. Sofern es sich bei der Laufbahn um eine Kugellaufbahn handelt und die Wälzelemente als Kugeln, insbesondere Wälzlagerkugeln ausgebildet sind, ist der Drehkranz wie beschrieben als Kugeldrehkranz ausgelegt. Das ist selbstverständlich nicht zwingend und nur als bevorzugte Variante anzusehen.

Wie bereits beschrieben, verfügt das zweiteilige Gestell nach einer ersten erfindungsgemäßen Variante neben dem kopfseitig der Kippvorrichtung und gelenkig abgestützten Lagerbock zusätzlich über den schwenkbaren Tragarm. Dieser Tragarm kann im Rahmen einer zweiten bzw. weiteren Alternative, die nicht zur Erfindung gehört, mit wenigstens einem Lagerelement für die Ofentrommel und zumindest einem Führungselement ausgerüstet werden. Meistens sind zwei Lagerelemente realisiert. Auf diese Weise erfährt die Ofentrommel im Regelfall eine Dreipunktlagerung, nämlich einerseits mit Hilfe der Kippvorrichtung und dem kopfseitig der Kippvorrichtung vorgesehenen und an dieser gelenkig abgestützten Lagerbock und andererseits den vom Tragarm aufgenommenen beiden Lagerelementen.

Das wenigstens eine Führungselement am Tragarm sorgt dafür, dass etwaige Axialbewegungen der Ofentrommel begrenzt werden. Zu diesem Zweck sind im Regelfall wenigstens zwei Führungselemente realisiert. Meistens finden sich zwei oder drei Führungselementpaare. Jedes Führungselementpaar nimmt jeweils einen Führungssteg an der Ofentrommel zwischen sich auf.

Bei den Lagerelementen und den Führungselementen handelt es sich vorteilhaft um jeweils Rollen, die kostengünstig zur Verfügung stehen und im Bedarfsfall problemlos ausgetauscht werden können. Dabei ist die Auslegung meistens so getroffen, dass die Lagerelemente für die Ofentrommel in einer Radialebene in Bezug auf die Ofentrommel rotierbar ausgebildet sind. Demgegenüber sind die Führungselemente in einer oder mehreren Axialebenen der Ofentrommel rotierbar ausgelegt. Dadurch sind die Führungselemente in Verbindung mit dem jeweils zwischen ihnen aufgenommenen Führungssteg an der Ofentrommel in der Lage, Axialbewegungen der Ofentrommel in gewissen Grenzen aufnehmen zu können. Tatsächlich handelt es sich bei dem Führungssteg an der Ofentrommel regelmäßig um einen die Ofentrommel umgebenden Führungsring. Dieser Führungsring umringt die Ofentrommel außenseitig, und zwar radial und über den gesamten Umfang der Ofentrommel gesehen.

Die zwei oder drei Führungselementpaare sind nun so ausgelegt, dass sie den Führungsring jeweils zwischen sich aufnehmen. Dadurch werden Axialbewegungen der Ofentrommel und folglich ihrer Längsachse in dem Maße zugelassen, wie der Führungsring zwischen den beiden sich gegenüberliegenden Führungsrollen des jeweiligen Führungselementpaares hin- und her bewegt werden kann.

Der Tragarm ist insgesamt U-förmig ausgebildet. Folgerichtig verfügt der Tragarm über eine U-Basis und zwei U-Schenkel. Die U-Basis nimmt im Regelfall die beiden Lagerelemente bzw. Lagerollen auf, die sich an der U-Basis abstützen. Außerdem ist an der U-Basis meistens ein Führungselementpaar angeordnet. Die beiden U-Schenkel tragen jeweils kopfseitig ein Führungselementpaar. Außerdem sind die U-Schenkel des Tragarmes in ortsfesten Seitenwangen gelagert, und zwar jeweils senkrecht zur Längsachse. D. h., die beiden Lager in der Seitenwange definieren eine erste horizontale Achse, die sich an einem Ofenende befindet. Im Regelfall handelt es sich hierbei um das mit einer Ofenöffnung bzw. einer Ofentür ausgerüstete Ofenende. Darüber hinaus ist noch eine zweite horizontale Achse vorgesehen, die von den beiden jeweils kopfseitig an den Zylinderkolbenanordnungen gelenkig abgestützten Lagern definiert wird. Diese zweite horizontale Achse findet sich am anderen Ofenende, und zwar im Bereich des dort vorgesehenen hinteren Bolzens oder Zapfens, an welchem der (hydraulische) Antrieb angreift. Auf diese Weise kann die Ofentrommel die bereits beschriebenen und gewünschten Kippbewegungen vollführen, indem die beiden Zylinderkolbenanordnungen entsprechend beaufschlagt werden. Die beiden horizontalen Achsen definieren die einleitend bereits angesprochenen Endpunkte der Längsachse der Ofentrommel.

Das eine bzw. die beiden Lager bzw. Lagerböcke sind unter Zwischenschaltung von Drehgelenken mit Schwenkaugen an die zugehörigen Kippvorrichtungen bzw. Zylinderkolbenanordnungen angeschlossen. Auf diese Weise kann die zweite horizontale Achse - in vorgegebenen Grenzen - Schwenkbewegungen vollführen. Solche Schwenkbewegungen werden im Bereich der ersten horizontalen Achse dadurch zugelassen, dass die Ofentrommel (minimal) gegenüber den sie tragenden Laufrollen hin- oder her bewegt wird. Darüber hinaus sind geringfügige Axialbewegungen der Längsachse der Ofentrommel möglich. Denn die zweite horizontale Achse lässt solche Axialbewegungen zu und im Bereich der ersten horizontalen Achse führen diese dazu, dass der Tragarm gegenüber dem Führungsring leicht schräggestellt wird.

Im Ergebnis wird ein Drehtrommelofen und insbesondere ein Kipptrommelofen zur Verfügung gestellt, der mit einer kardanischen Lagerung gegenüber seinem Gestell ausgerüstet ist. Außerdem ist das Gestell zweiteilig ausgelegt und verfügt über wenige Konstruktionselemente. Auf diese Weise werden zum einen betriebsbedingte Bewegungen der Ofentrommel problemlos aufgenommen und gelingt dies zum anderen unter Rückgriff auf eine besonders einfache und kostengünstige Ausgestaltung.

Die kardanische Lagerung verfügt im Rahmen der ersten Variante wesentlich über zwei Lagerringe einerseits frontseitig und andererseits rückseitig der Ofentrommel. Die Lagerringe können nach bevorzugter Ausführungsform jeweils als Kugeldrehkranz ausgelegt sein, sind also in der Lage, problemlos die von der Ofentrommel um ihre Längsachse vollführten Drehbewegungen aufzunehmen, und zwar dauerhaft und selbst unter Berücksichtigung erheblicher Gewichte der Ofentrommel. In diesem Fall entfallen an dieser Stelle typischerweise notwendige Laufringe an der Ofentrommel und zugehörige sowie sich an den Laufringen abwälzende Laufrollen, die meistens für den Antrieb der Ofentrommel genutzt werden. Vielmehr kann der Antrieb im Rahmen der Erfindung beispielsweise über einen außenseitig der Ofentrommel vorgesehenen Zahnkranz erfolgen, in welchen ein motorgetriebenes Zahnrad eingreift. Dadurch lassen sich auch mit einem relativ klein ausgelegten Motor hohe Drehmomente sicher übertragen.

Hinzukommt, dass betriebsbedingte Bewegungen der Ofentrommel im Rahmen der Erfindung problemlos durch die kardanische Lagerung aufgenommen werden. Das alles gelingt unter Rückgriff auf eine besonders einfache und kostengünstige Ausgestaltung. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: den erfindungsgemäßen Drehtrommelofen in einer perspektivischen Ansicht,
- Fig. 2: den Gegenstand nach Fig. 1 im Bereich des frontseitigen Lagerringes teilweise im Schnitt,
- Fig. 3: den Gegenstand nach Fig. 1 im Bereich des rückseitigen Lagerringes ebenfalls teilweise im Schnitt,
- Fig. 4: den Drehtrommelofen und insbesondere Kipptrommelofen in einer Seitenansicht in zwei Funktionsstellungen bei einer abgewandelten und nicht zur Erfindung gehörigen Ausführungsform,
- Fig. 5: den Gegenstand nach Fig. 4 in Frontansicht,
- Fig. 6: eine Rückansicht des Gegenstandes nach Fig. 4 und
- Fig. 7 und 8: eine weitere Variante der Erfindung mit einer Abstichöffnung am rückwärtigen Ende.

In den Figuren ist ein Drehtrommelofen dargestellt, bei dem es sich im Ausführungsbeispiel und nicht einschränkend um einen Kipp-Drehtrommelofen und insbesondere einen Metallschmelz-Kipp-/Drehtrommelofen handelt. Der besagte Ofen verfügt über eine Ofentrommel 1 und ein Gestell 2, 3. Die Ofentrommel 1 ist drehbar in dem Gestell 2, 3 um ihre Längsachse 4 gelagert. Das Gestell 2, 3 ruht auf einer Basis B.

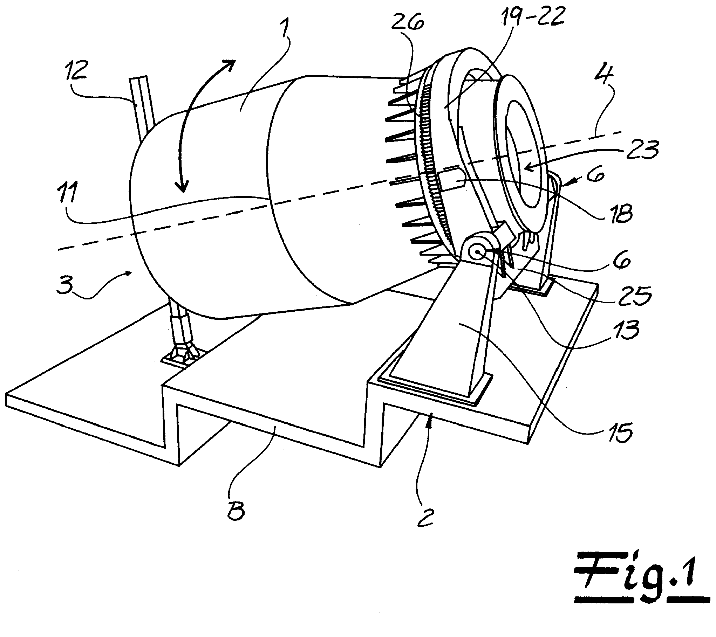

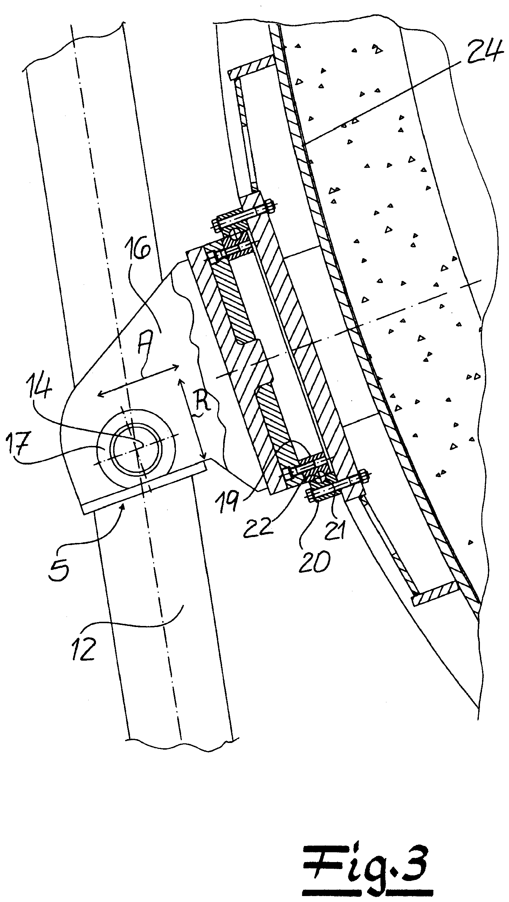

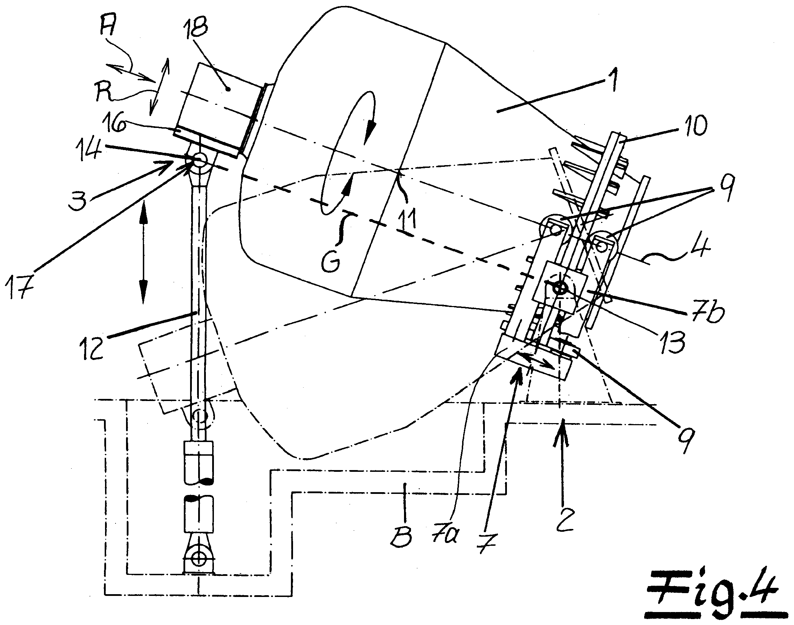

Erfindungsgemäß ist die Ofentrommel 1 mit einer kardanischen Lagerung 5, 6, 19 bis 22 (Fig. 1 bis 3) bzw. 5 bis 10 (Fig. 4 bis 6) ausgerüstet. Die kardanische Lagerung 5, 6, 19 bis 22 weist im Detail ein Gelenk 5 an einer Rückseite der Ofentrommel 1 auf, wie es in der Fig. 3 dargestellt ist. Zusätzlich sind zwei Lager 6 an der Frontseite der Ofentrommel 1 realisiert, die eine Schwenkbewegung der Ofentrommel 1 um eine erste horizontale Achse 13 zulassen. Zu dieser ersten horizontalen Achse 13 korrespondiert eine weitere zweite horizontale Achse 14 an der Rückseite der Ofentrommel 1, um die die Ofentrommel 1 insgesamt verschwenkt werden kann. Hierzu ist das Gestell 2, 3 mit einer angreifenden und insbesondere in der Fig. 3 zu erkennenden Kippvorrichtung 12 ausgerüstet. Die Kippvorrichtung 12 setzt sich im Ausführungsbeispiel aus zwei Zylinderkolbenanordnungen 12 zusammen. Auf diese Weise kann die Ofentrommel 1 von der in Fig. 1 dargestellten Position um die erste horizontale Achse 13 verschwenkt werden, wie dies ein Doppelpfeil in der Fig. 1 andeutet.

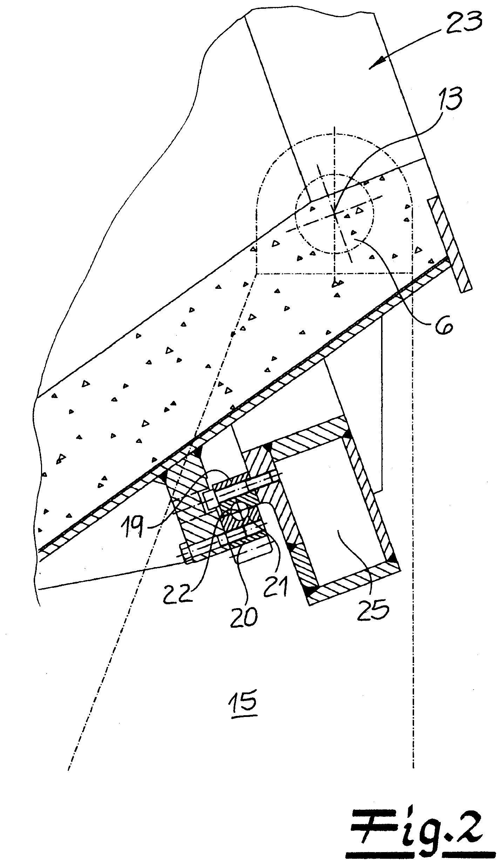

Neben dem Gelenk 5 rückseitig der Ofentrommel 1 und den beiden Lagern 6 an der Frontseite der Ofentrommel 1 weist die kardanische Lagerung 5, 6, 19 bis 22 zusätzlich noch einen Lagerring 19 bis 22 auf. Tatsächlich ist ein solcher Lagerring 19 bis 22 sowohl an der Frontseite der Ofentrommel 1 als auch an der Rückseite der Ofentrommel 1 realisiert, wie die Fig. 2 und 3 deutlich machen.

Anhand der Fig. 1 in Verbindung mit der Fig. 2 erkennt man, dass der frontseitige Lagerring 19 bis 22 eine dortige und frontseitig vorgesehene Öffnung 23 bzw. Ofenöffnung 23 in der Ofentrommel 1 übergreift. Dementsprechend verfügt der frontseitige Lagerring 19 bis 22 über einen Durchmesser, welcher größer als derjenige der Öffnung 23 ausgelegt ist. Demgegenüber ist der rückseitige Lagerring 19 bis 22 ausweislich der Fig. 1 und 3 an eine Rückwand 24 der Ofentrommel 1 angeschlossen bzw. verbindet diese Rückwand 24 drehbar mit einem Lagerbock 16, der seinerseits über das bereits angesprochene Gelenk 5 an die Kippvorrichtung 12 angeschlossen ist.

Der jeweilige Lagerring 19 bis 22 setzt sich jeweils aus einem Festlagerring 19 und einem Loslagerring 20 zusammen. Der Festlagerring 19 ist jeweils ortsfest ausgelegt und zu diesem Zweck bei dem frontseitigen Lagerring 19 bis 22 an dortige ortsfeste Seitenwangen 15 angeschlossen. Die ortsfesten Seitenwangen 15 weisen kopfseitig die bereits angesprochenen Lager 6 auf, welche letztlich den zugehörigen Festlagerring 19 tragen.

Zu diesem Zweck ist an die beiden Lager 6 im Detail ein Tragbalken bzw. Tragarm 25 angeschlossen, der seinerseits fest mit dem Festlagerring 19 durch in der Fig. 2 zu erkennende Schrauben verbunden ist. Im Bereich der Rückwand 24 bzw. rückseitig der Ofentrommel 1 ist der Festlagerring 19 - wie beschrieben - mit dem Lagerbock 16 (ebenfalls über Schrauben; vgl. Fig. 3) verbunden, der seinerseits über das Gelenk 5 gelenkig an die Kippvorrichtung 12 angeschlossen ist. Dadurch kann die Ofentrommel 2 bei den bereits erläuterten Koppbewegungen an dieser Stelle eine Schwenkbewegung um die zweite horizontale Achse 14 vollführen.

Zwischen dem jeweiligen Festlagerring 19 und dem Loslagerring 20 ist eine Laufbahn 21 vorgesehen. Anhand der beiden Schnittdarstellungen in den Fig. 2 und 3 erkennt man, dass die jeweilige Laufbahn 21 im Querschnitt kreisförmig und insgesamt als Kugellaufbahn 21 ausgelegt ist. Tatsächlich beschreibt die Laufbahn 21 einen Kreisring und dient zur Aufnahme von Wälzelementen 22. Bei den Wälzelementen 22 handelt es sich im Ausführungsbeispiel um Kugeln, insbesondere Stahlkugeln, sogenannte Wälzlagerkugeln 22. Aus diesem Grund ist der jeweilige Lagerring 19 bis 22 insgesamt als Drehkranz und nach dem Ausführungsbeispiel als Kugeldrehkranz ausgelegt.

Für den Antrieb der Ofentrommel 1 zur Drehung um ihre Längsachse 4 ist ein Antrieb 18 vorgesehen, der in der Fig. 1 lediglich angedeutet ist. Tatsächlich handelt es sich bei dem Antrieb 18 vorliegend um einen Elektromotor, welcher ausgangsseitig mit einem Zahnrad in einen die Ofentrommel 1 umringenden und lediglich in Fig. 1 angedeuteten Zahnkranz 26 angreift. Grundsätzlich kann ein Antrieb 18 ausreichend sein. Im Regelfall wird man jedoch mit zwei sich gegenüberliegend in Bezug auf die Öffnung 23 angeordneten Antrieben 18 arbeiten, die jeweils mit zugehörigen Zahnrädern in den Zahnkranz 26 eingreifen.

Bewegungen der Ofentrommel 1 respektive ihrer Längsachse 4 in einer Radialrichtung R (vgl. Fig. 3) bzw. Schwenkbewegungen um einen Drehpunkt 11 der Längsachse 4 (zwischen den beiden durch die horizontalen Achsen 13, 14 definierten Endpunkten der Längsachse 4) werden dadurch aufgenommen, dass im Bereich der zweiten horizontalen Achse 14 bzw. des dortigen Gelenkes 5 die an dieser Stelle vorgesehenen Lager 17 mit Schwenkaugen ausgerüstet sind. Dadurch kann der Lagerbock 16 in der Darstellung nach Fig. 3 zu gewissem Grad schräggestellt werden bzw. lässt solche Schrägstellungen zu.

Außerdem können Bewegungen der Ofentrommel 1 bzw. ihrer Längsachse 4 in einer ebenfalls in Fig. 3 angegebenen Axialrichtung A aufgenommen werden. Das ist möglich, weil hierzu der Lagerbock 16 um die zweite horizontale Achse 14 gegenüber der Kippvorrichtung 12 verschwenkt werden kann. Außerdem wird eine betreffende Bewegung der Ofentrommel 1 in der Axialrichtung A im Bereich der ersten horizontalen Achse 13 derart aufgenommen, dass die Lagerringe 19 bis 22 solche Axialbewegungen in gewissen Grenzen zulassen.

Jedenfalls wird deutlich, dass etwaige temperatur- oder verschleißbedingte Taumelbewegungen der Längsachse 4 der Ofentrommel 1 problemlos und innerhalb gewisser Grenzen im Rahmen der Erfindung ausdrücklich zugelassen werden. Diese Grenzen werden einerseits von den Schwenkaugen bzw. den gelenkigen Lagern 17 und andererseits den jeweiligen Lagerringen 19 bis 22 in Verbindung mit den Lagern 6 zugelassen. Außerdem eröffnet die beschriebene kardanische Lagerung 5, 6, 19 bis 22 die Möglichkeit, die Ofentrommel 1 durch Verschwenken um den Drehpunkt 11 bzw. um eine oder beide horizontale Achsen 13, 14 mit Hilfe der Kippvorrichtung 12 über die Öffnung 23 zu entleeren oder gegebenenfalls die Ofentrommel 1 hierüber auch zu beschicken.

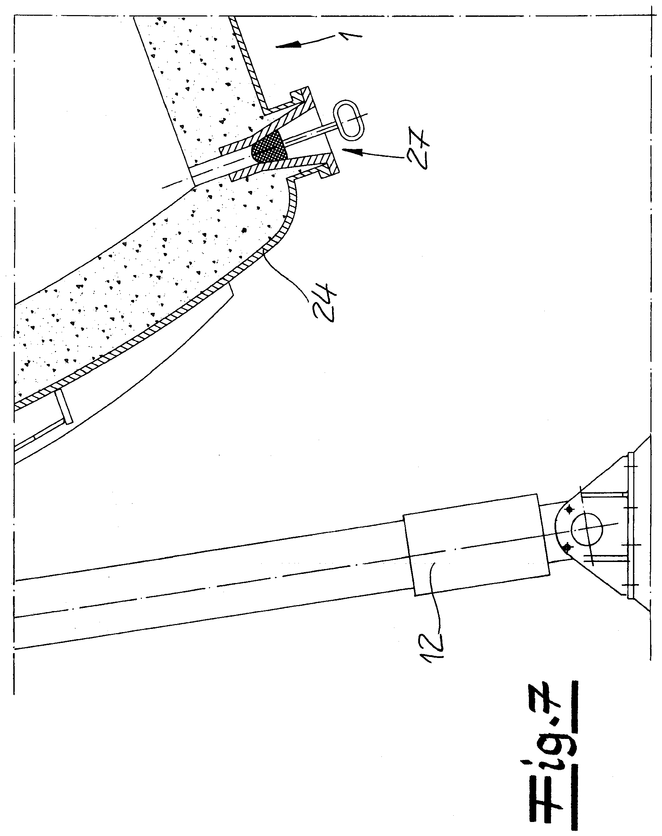

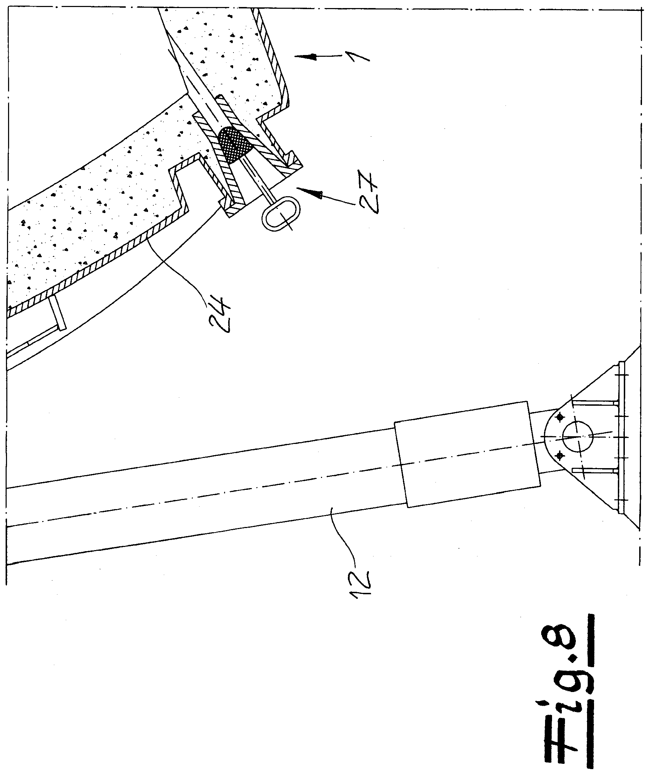

Alternativ hierzu lässt sich die Ofentrommel 1 auch über eine Abstichöffnung 27 am rückwärtigen Ende bzw. im Bereich der Rückwand 24 entleeren. Das ist in den Fig. 7 und 8 dargestellt. Die Abstichöffnung 27 kann infolge der kardanischen Lagerung 5, 6; 19 bis 22; 5 bis 10 der Ofentrommel 1 an Ort und Stelle bleiben, wobei lediglich die Kippvorrichtung 12 für eine entsprechende Schrägstellung der Ofentrommel 1 sorgen mag. Dadurch kann eine Unterkante der Abstichöffnung 27 räumlich beibehalten werden, was den Materialfluß verbessert.

Vergleichbar wird bei dem zweiten Ausführungsbeispiel nach den Fig. 4 bis 6 vorgegangen. Auch in diesem Fall ist ein Drehtrommelofen dargestellt, bei dem es sich nicht einschränkend um einen Kipp-Drehtrommelofen und insbesondere einen Metallschmelz-Kipp-/Drehtrommelofen handelt. Wie bereits beschrieben, verfügt der besagte Ofen über die Ofentrommel 1 und das Gestell 2, 3. Die Ofentrommel 1 ist erneut drehbar in dem Gestell 2, 3 um ihre Längsachse 4 gelagert. Das Gestell 2, 3 ruht auf der Basis B.

Bei dem nicht zur Erfindung gehörigen Ausführungsbeispiel nach den Fig. 4 bis 6 ist die Ofentrommel 1 ebenfalls mit einer kardanischen Lagerung 5 bis 10 gegenüber dem Gestell 2, 3 ausgerüstet. Die kardanische Lagerung 5 bis 10 lässt Bewegungen der Längsachse 4 der Ofentrommel 1 in ihrer Axialrichtung A und/oder in Radialrichtung R und/oder Schwenkbewegungen der Längsachse 4 um den Drehpunkt 11 der Längsachse 4 jeweils innerhalb vorgegebener Grenzen zu. Derartige Bewegungen werden gegenüber einer Gestelllängsachse G beobachtet (vgl. Fig. 4).

Das Gestell 2, 3 ist vergleichbar mit der angreifenden Kippvorrichtung 12 ausgerüstet. Die Kippvorrichtung 12 setzt sich im Ausführungsbeispiel aus zwei Zylinderkolbenanordnungen 12 zusammen. Auf diese Weise kann die Ofentrommel 1 von ihrer durchgezogen dargestellten Stellung in Fig. 4 in die strichpunktiert gezeigte Position und zurück verschwenkt werden, und zwar um die erste horizontale Achse 13. Außerdem ist die zweite horizontale Achse 14 vorgesehen.

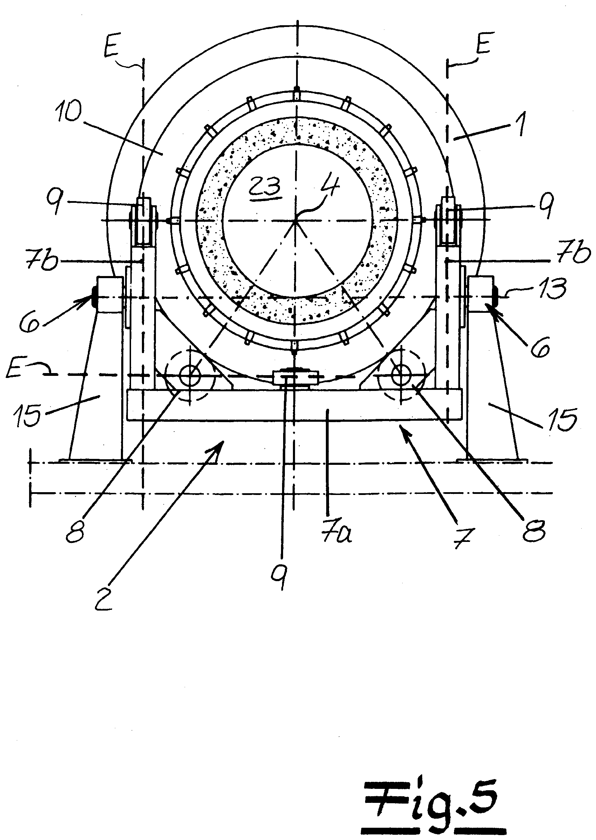

Die erste horizontale Achse 13 wird von den zwei Lagern 6 definiert, die sich in den ortsfesten Seitenwangen 15 befinden. Mit Hilfe dieser Lager 6 ist ein Tragarm 7 als Bestandteil 7 der kardanischen Lagerung 5 bis 10 gegenüber den ortsfesten Seitenwangen 15 gelagert. Tatsächlich kann der U-förmig ausgebildete Tragarm 7 Schwenkbewegungen um die fragliche erste horizontale Achse 13 vollführen. Die erste horizontale Achse 13 findet sich an einem Ende der Ofentrommel 1, vorwiegend am öffnungsseitigen Ende der Ofentrommel 1 (vgl. Fig. 5).

Der U-förmige Tragarm 7 setzt sich aus einer U-Basis 7a und U-Schenkeln 7b zusammen. Die U-Schenkel 7b sind jeweils mit Hilfe von Zapfen in den fraglichen Lagern 6 der ortsfesten Seitenwangen 15 gelagert. Kopfseitig der U-Schenkel 7b des Tragarmes 7 finden sich jeweils zwei Führungselemente 9 beidseitig der in Fig. 5 zu erkennenden Ofenöffnung 23. Die beiden Führungselemente 9 sind als Führungselementpaar 9 ausgelegt und jeweils als Rollen 9 ausgeführt. Außerdem nimmt das jeweilige Führungselementpaar 9 jeweils einen Führungssteg 10 zwischen sich auf.

Die Führungselemente 9 bzw. das jeweilige Führungselementpaar 9 in Verbindung mit dem Führungssteg 10 stellen ebenfalls Bestandteile der kardanischen Lagerung 5 bis 10 dar. Bei dem Führungssteg 10 handelt es sich im Ausführungsbeispiel um einen Führungsring 10, welcher am öffnungsseitigen Ende der Ofentrommel 1 angeordnet ist und diese an ihrer Außenseite vollständig umringt. Am gegenüberliegenden Ende der Ofentrommel 1 ist ein Gelenk 5 als weiterer Bestandteil der kardanischen Lagerung 5 bis 10 vorgesehen. Mit Hilfe des Gelenkes 5 ist die Kippvorrichtung 12 kopfseitig an das antriebsseitige Ende der Ofentrommel 1 angeschlossen.

Der Tragarm 7 definiert in Verbindung mit den beiden ortsfesten Seitenwangen 15 zu seiner drehbaren Lagerung in den Lagern 6 einen ersten Bestandteil 2 des Gestells 2, 3. Bei dem zweiten Bestandteil 3 des Gestells 2, 3 handelt es sich um den Lagerbock 16, welcher sich mit Hilfe der gelenkigen Lager 17 mit Schwenkaugen gegenüber der ihn kopfseitig tragenden Kippvorrichtung 12 abstützt. Da sich die Kippvorrichtung 12 aus zwei Zylinderkolbenanordnungen 12 zusammensetzt, finden sich jeweils kopfseitig dieser Zylinderkolbenanordnungen 12 die zugehörigen gelenkigen Lager 17 mit jeweils Schwenkaugen, welche ihrerseits den Lagerbock 16 tragen und aufnehmen. Dadurch ist das bereits angesprochene Gelenk 5 realisiert.

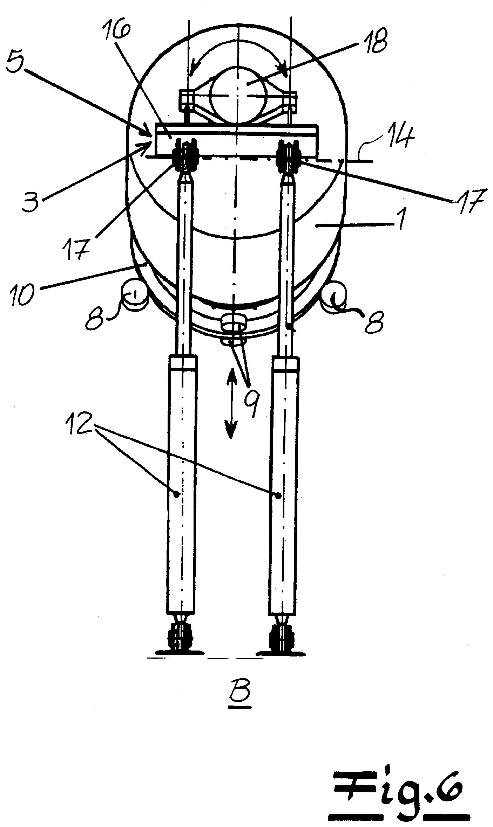

Auf dem Lagerbock 16 ist seinerseits der Antrieb 18 angeordnet und stützt sich hierauf ab. Mit Hilfe des Antriebes 18 wird die Ofentrommel 1 um ihre Längsachse 4 in Rotationen versetzt, wie ein Doppelpfeil in den Fig. 4 und 6 andeutet. Tatsächlich kann je nach Antriebsrichtung des Antriebes 18 die Ofentrommel 1 Drehbewegungen im Uhrzeigersinn und im Gegenuhrzeigersinn ausgehend von der Frontansicht nach Fig. 5 vollführen, wie dies die Doppelpfeile in den Fig. 4 bzw. Fig. 6 andeuten. Alternativ oder zusätzlich zu dem dargestellten Antrieb 18 können auch ein oder mehrere nachfolgend noch näher zu beschreibende Lagerelemente bzw. Rollen 8 mit einem Antrieb ausgerüstet werden. Selbstverständlich sind in diesem Zusammenhang auch zusätzliche Antriebsrollen denkbar.

Der Tragarm 7 nimmt mit seiner U-Basis 7a zwei Lagerelemente 8 für die Ofentrommel 1 auf. Außerdem ist ein weiteres Führungselementpaar 9 an der fraglichen U-Basis 7a angeordnet. Bei den Führungselementen 9 wie auch bei den Lagerelementen 8 handelt es sich jeweils um Rollen 8, 9, die um zugehörige Achsen rotieren. Tatsächlich sind die Lagerelemente 8 in einer Radialebene der Ofentrommel 1 bzw. in deren Radialrichtung R rotierbar ausgebildet. Die Radialebene der Ofentrommel 1 erstreckt sich in der Radialrichtung R, wie bei einem Vergleich der Fig. 4 und 5 deutlich wird. Demgegenüber sind die Führungselemente 9 in einer oder mehreren Axialebenen E rotierbar ausgebildet. Diese Axialebenen E sind jeweils in der Fig. 5 gestrichelt angedeutet. Man erkennt, dass die Axialebenen E senkrecht zueinander angeordnet sind, so dass die Ofentrommel 1 eine einwandfreie Führung in der Axialrichtung A durch das Zusammenspiel der Führungselemente 9 mit dem Führungssteg 10 erfährt.

Bewegungen der Ofentrommel 1 bzw. ihrer Längsachse 4 in der Axialrichtung A werden nun derart aufgenommen, dass zunächst einmal der Lagerbock 16 um die zweite horizontale Achse 14 gegenüber der Kippvorrichtung 12 verschwenkt wird. Außerdem wird die betreffende Bewegung der Ofentrommel 1 in der Axialrichtung A im Bereich der ersten horizontalen Achse 13 derart aufgenommen und zugelassen, dass die Führungselementpaare 9 mit dem zwischen den einzelnen Führungsrollen 9 aufgenommenen Führungssteg 10 solche Axialbewegungen in gewissen Grenzen zulassen. Denn bei diesem Vorgang wird in der Seitenansicht der Fig. 1 der jeweilige U-Schenkel 7b des Tragarmes 7 geringfügig gegenüber dem Führungssteg respektive Führungsring 10 schräggestellt. Das deutet der Doppelpfeil in der Fig. 4 am Tragarm 7 an. Tatsächlich sind an diese Stelle jeweils zwei U-Schenkel bzw. ein U-Schenkelpaar 7b realisiert.

Bewegungen der Ofentrommel 1 respektive ihrer Längsachse 4 in der Radialrichtung R bzw. Schwenkbewegungen um einen Drehpunkt 11 der Längsachse 4 werden dadurch aufgenommen, dass im Bereich der zweiten horizontalen Achse 14 die dortigen Lager 17 mit Schwenkaugen ausgerüstet sind, folglich der Lagerbock 16 zu gewissem Grade in der Seitenansicht nach Fig. 4 gegenüber der Kippvorrichtung 12 schräggestellt werden kann bzw. solche Schrägstellungen zulässt. Derartiges wird im Bereich der ersten horizontalen Achse 13 problemlos dadurch aufgenommen, dass die Ofentrommel 1 geringfügig gegenüber den Laufrollen 8 wandert.

Eine etwaige Schrägstellung des Lagerbockes 16 gegenüber der Horizontalen wird in der Regel dadurch vermieden bzw. aufgefangen, dass die Kippvorrichtung 12 bzw. die an dieser Stelle realisierten Zylinderkolbenanordnungen 12 synchron laufen. Das kann auf mechanischem und/oder elektrischem und/oder elektronischem Wege geschehen, wie dies einleitend bereits beschrieben wurde (vgl. Fig. 6).
Jedenfalls wird deutlich, dass etwaige temperatur- oder verschleißbedingte Taumelbewegungen der Längsachse 4 der Ofentrommel 1 problemlos und innerhalb gewisser Grenzen im Rahmen der Erfindung ausdrücklich zugelassen werden. Diese Grenzen werden einerseits von den Schwenkaugen bzw. den gelenkigen Lagern 17 und andererseits dem Zusammenspiel zwischen den Führungselementen 9 bzw. Führungselementpaaren 9 und dem jeweils zwischen den Führungselementen 9 aufgenommenen Führungssteg 10 und dem hier beobachteten Spiel vorgegeben. Derartige und etwaige Taumelbewegungen treten mit lediglich geringer Frequenz auf, weil die Ofentrommel 1 nur wenige Umdrehungen pro Minute vollführt, beispielsweise drei bis sechs Umdrehungen typischerweise. - Anstelle des beschriebenen hydraulischen Antriebes für die Ofentrommel 1 sind natürlich auch andere Antriebe denkbar, beispielsweise mit Hilfe einer Kette oder über Zahnräder. Das ist jedoch nicht dargestellt.

## Patentansprüche

1. Drehtrommelofen, insbesondere Metallschmelz-Drehtrommelofen, vorzugsweise Metallschmelz-Kipp-/Drehtrommelofen, mit
- einer um ihre Längsachse (4) drehbar in einem Gestell (2, 3) gelagerten Ofentrommel (1), wobei
- die Ofentrommel (1) mit einer kardanischen Lagerung (5, 6, 19 bis 22; 5 bis 10) gegenüber dem Gestell (2, 3) ausgerüstet ist, und wobei
- wenigstens ein Lagerring (19 bis 22) als Bestandteil der kardanischen Lagerung (5, 6, 19 bis 22; 5 bis 10) realisiert ist, welcher
- die Ofentrommel (1) drehbar aufnimmt und von zwei ihn gelenkig tragenden Lagern (6) gehalten wird,
**dadurch gekennzeichnet, dass**
- der Lagerring (19 bis 22) wenigstens zweiteilig mit einem ortsfesten Festlagerring (19) und einem an die Ofentrommel (1) angeschlossenen Loslagerring (20) ausgebildet ist, so dass
- die Ofentrommel (1) mit dem zugehörigen Loslagerring (20) gegenüber dem Festlagerring (19) problemlos um ihre Längsachse (4) rotieren kann.

2. Drehtrommelofen nach Anspruch 1, **dadurch gekennzeichnet, dass** die kardanische Lagerung (5, 6, 19 bis 22; 5 bis 10) Bewegungen der Längsachse (4) in Axialrichtung (A) und/oder Radialrichtung (R) und/oder Schwenkbewegungen um einen Drehpunkt (11) der Längsachse (4) jeweils innerhalb vorgegebener Grenzen zulässt.

3. Drehtrommelofen nach Anspruch 1 oder 2, **dadurch gekennzeichnet, dass** die kardanische Lagerung (5, 6, 19 bis 22; 5 bis 10) zumindest zwei sowie wenigstens einen die Ofentrommel (1) drehbar aufnehmenden Lagerring (19 bis 22) gelenkig tragende Lager (6) aufweist.

4. Drehtrommelofen nach einem der Ansprüche 1 bis 3, **dadurch gekennzeichnet, dass** der Lagerring (19 bis 22) als Drehkranz, insbesondere Kugeldrehkranz (19 bis 22) mit zwischen den beiden Lagerringen (19, 20) in einer Laufbahn (21) geführten Wälzelementen (22) ausgebildet ist.

5. Drehtrommelofen nach Anspruch 4, **dadurch gekennzeichnet, dass** die Laufbahn (21) als Kugellaufbahn (21) und die Wälzelemente (22) als Kugeln (22), insbesondere Wälzlagerkugeln (22), ausgebildet sind.

6. Drehtrommelofen nach einem der Ansprüche 1 bis 5, **dadurch gekennzeichnet, dass** das Gestell (2, 3) mehrteilig, insbesondere zweiteilig ausgebildet ist und hierzu den schwenkbaren Lagerring (19 bis 22) frontseitig an der Ofentrommel (1) und einen gelenkig abgestützten Lagerbock (16) rückseitig der Ofentrommel (1) mit ebenfalls einem Lagerring (19 bis 22) aufweist.

7. Drehtrommelofen nach einem der Ansprüche 1 bis 6, **dadurch gekennzeichnet, dass** das Gestell (2, 3) mehrteilig, insbesondere zweiteilig, ausgebildet ist und hierzu einen schwenkbaren Tragarm (7) und einen gelenkig abgestützten Lagerbock (16) aufweist.

8. Drehtrommelofen nach Anspruch 7, **dadurch gekennzeichnet, dass** der Lagerbock (16) unter Zwischenschaltung wenigstens eines gelenkigen Lagers (17) mit Schwenkaugen an eine Kippvorrichtung (12) angeschlossen ist.

9. Drehtrommelofen nach einem der Ansprüche 1 bis 8, **dadurch gekennzeichnet, dass** das Gestell (2, 3) mit einer angreifenden Kippvorrichtung (12) ausgerüstet ist.

10. Drehtrommelofen nach Anspruch 9, **dadurch gekennzeichnet, dass** die Kippvorrichtung (12) wenigstens einen, vorzugsweise zwei Zylinderkolbenanordnungen (12) aufweist.

11. Drehtrommelofen nach Anspruch 9 oder 10, **dadurch gekennzeichnet, dass** sich der Lagerbock (16) gelenkig an der Kippvorrichtung (12) abstützt.

## Claims

1. A rotary drum furnace, in particular a metal melt rotary drum furnace, preferably a metal melt tilting/rotary drum furnace, comprising
- a furnace drum (1), which is mounted in a frame (2, 3) rotatably about its longitudinal axis (4), wherein
- the furnace drum (1) is equipped with a cardanic mounting (5, 6, 19 to 22; 5 to 10) relative to the frame (2, 3), and wherein
- at least one bearing ring (19 to 22) is provided as part of the cardanic mounting (5, 6, 19 to 22; 5 to 10), which bearing ring
- receives the furnace drum (1) rotatably and is held by two bearings (6) hingedly supporting said bearing ring,
**characterised in that**
- the bearing ring (19 to 22) is formed at least in two parts with a stationary fixed bearing ring (19) and a loose bearing ring (20) connected to the furnace drum (1), so that
- the furnace drum (1), with the associated loose bearing ring (20), can rotate without difficulty about its longitudinal axis (4) relative to the fixed bearing ring (19).

2. The rotary drum furnace according to claim 1, **characterised in that** the cardanic mounting (5, 6, 19 to 22; 5 to 10) permits movements of the longitudinal axis (4) in the axial direction (A) and/or radial direction (R) and/or pivoting movements about a pivot point (11) of the longitudinal axis (4), in each case within predefined limits.

3. The rotary drum furnace according to claim 1 or 2, **characterised in that** the cardanic mounting (5, 6, 19 to 22; 5 to 10) comprises at least two hingedly supporting bearings (6) and at least one bearing ring (19 to 22) rotatably receiving the furnace drum (1).

4. The rotary drum furnace according to any one of claims 1 to 3, **characterised in that** the bearing ring (19 to 22) is formed as a slewing ring, in particular a ball-race slewing ring (19 to 22) with rolling elements (22) guided between the two bearing rings (19, 20) in a raceway (21).

5. The rotary drum furnace according to claim 4, **characterised in that** the raceway (21) is formed as a ball raceway (21) and the rolling elements (22) are formed as balls (22), in particular rolling bearing balls (22).

6. The rotary drum furnace according to any one of claims 1 to 5, **characterised in that** the frame (2, 3) is formed in a number of parts, in particular in two parts, and for this purpose has the pivotable bearing ring (19 to 22) on the front side of the furnace drum (1) and a hingedly supported bearing block (16) on the rear side of the furnace drum (1), likewise with a bearing ring (19 to 22).

7. The rotary drum furnace according to any one of claims 1 to 6, **characterised in that** the frame (2, 3) is formed in a number of parts, in particular in two parts, and to this end has a pivotable support arm (7) and a hingedly supported bearing block (16).

8. The rotary drum furnace according to claim 7, **characterised in that** the bearing block (16) is connected to a tilting device (12) with at least one hinged bearing (17) having pivot eyes arranged in-between.

9. The rotary drum furnace according to any one of claims 1 to 8, **characterised in that** the frame (2, 3) is equipped with a tilting device (12) that acts on the frame.

10. The rotary drum furnace according to claim 9, **characterised in that** the tilting device (12) has at least one, preferably two cylinder piston arrangements (12).

11. The rotary drum furnace according to claim 9 or 10, **characterised in that** the bearing block (16) is hingedly supported on the tilting device (12).

## Revendications

1. Four à tambour rotatif, notamment four à tambour rotatif de fusion du métal, de préférence four à tambour rotatif de fusion du métal basculant, comportant :
- un tambour de four (1) logé de manière rotative autour de son axe longitudinal (4) dans un châssis (2, 3),
- le tambour de four (1) étant équipé d'un support cardanique (5, 6, 19 à 22 ; 5 à 10) par rapport au châssis (2, 3) et
- au moins une bague de support (19 à 22) étant réalisée en tant qu'élément du support cardanique (5, 6, 19 à 22 ; 5 à 10) lequel
- reçoit le tambour de four (1) de manière rotative et est maintenu par deux paliers (6) le portant de manière articulée,
**caractérisé en ce que**
- la bague de support (19 à 22) est conçue au moins en deux parties, avec une bague de support fixe (19) stationnaire et une bague de support mobile (20) raccordée sur le tambour de four (1), de telle sorte que
- le tambour de four (1) avec la bague de support mobile (20) associé puisse tourner sans problème autour de son axe longitudinal (4) par rapport à la bague de support fixe (19).

2. Four à tambour rotatif selon la revendication 1, **caractérisé en ce que** le support cardanique (5, 6, 19 à 22 ; 5 à 10) admet des déplacements de l'axe longitudinal (4) en direction axiale (A) et/ou en direction radiale (R) et/ou des déplacements en pivotement autour d'un point de rotation (11) de l'axe longitudinal (4), chaque fois à l'intérieur de limites prédéfinies.

3. Four à tambour rotatif selon la revendication 1 ou 2, **caractérisé en ce que** le support cardanique (5, 6, 19 à 22 ; 5 à 10) comporte au moins deux paliers (6) ainsi qu'au moins un lequel porte de manière articulée la bague de support (19 à 22) recevant de manière rotative le tambour de four (1).

4. Four à tambour rotatif selon l'une quelconque des revendications 1 à 3, **caractérisé en ce que** la bague de support (19 à 22) est conçue sous la forme d'une couronne rotative, notamment d'une couronne rotative à billes (19 à 22), avec des éléments roulants (22) guidés entre les deux bagues de supports (19, 20) dans une piste de roulement (21).

5. Four à tambour rotatif selon la revendication 4, **caractérisé en ce que** la piste de roulement (21) est conçue sous la forme d'une piste de roulement à billes (21) et les éléments roulants (22) sont conçus sous la forme de billes (22), notamment de billes de roulement à billes (22).

6. Four à tambour rotatif selon l'une quelconque des revendications 1 à 5, **caractérisé en ce que** le châssis (2, 3) est conçu en plusieurs parties, notamment en deux parties et à cet effet, comporte la bague de support (19 à 22) susceptible de pivoter sur la face frontale sur le tambour de four (1) et un support de palier (16) soutenu de manière articulée sur la face arrière du tambour de four (1), avec également une bague de support (19 à 22).

7. Four à tambour rotatif selon l'une quelconque des revendications 1 à 6, **caractérisé en ce que** le châssis (2, 3) est conçu en plusieurs parties, notamment en deux parties et à cet effet comporte un bras porteur (7) susceptible de pivoter et un support de palier (16) soutenu de manière articulée.

8. Four à tambour rotatif selon la revendication 7, **caractérisé en ce que** le support de palier (16) est raccordé sur un dispositif de basculement (12), avec interposition d'au moins un palier (17) articulé avec des oeillets pivotants.

9. Four à tambour rotatif selon l'une quelconque des revendications 1 à 8, **caractérisé en ce que** le châssis (2, 3) comporte un dispositif de basculement (12) qui se met en prise.

10. Four à tambour rotatif selon la revendication 9, **caractérisé en ce que** le dispositif de basculement (12) comporte au moins un, de préférence deux agencements piston/cylindre (12).

11. Four à tambour rotatif selon la revendication 9 ou 10, **caractérisé en ce que** le support de palier (16) est soutenu de manière articulée sur le dispositif de basculement (12).
